Europäisches Patentamt

European Patent Office

Office européen des brevets

(11) Publication number: 0 309 062
A1

# EUROPEAN PATENT APPLICATION

(21) Application number: 88202064.7

(51) Int. Cl.⁴ A01C 17/00

(22) Date of filing: 22.09.88

(30) Priority: 25.09.87 NL 8702290

(43) Date of publication of application:
29.03.89 Bulletin 89/13

(84) Designated Contracting States:
DE FR GB NL

(71) Applicant: C. van der Lely N.V.
Weverskade 10 P.O. Box 26
NL-3155 ZG Maasland(NL)

(72) Inventor: Van der Lely, Cornelis
7, Brüschenrain
Zug(CH)

(74) Representative: Mulder, Herman et al
Octrooibureau Van der Lely N.V. Weverskade
10 P.O. Box 26
NL-3155 ZG Maasland(NL)

(54) A measuring device for a machine for spreading material.

(57) A measuring device (1) for a machine for spreading granular and/or pulverulent material such as fertilizer. The machine comprises a hopper (27) including a discharge section (28) having at least one discharge outlet (30, 31), through which discharge outlet, during operation of the machine, the said material can be fed from the hopper (27) to a spreader member (36) in order to be spread over a surface area. The measuring device (1) is one that can be used separately from the machine (26) and comprises a reservoir (3) including a discharge section (4) having a discharge outlet (5, 6), which discharge section (4) and discharge outlet (5, 6) are at least substantially identical to those of the hopper (27). The arrangement is such that, independently of the machine (26), by means of the measuring device (1), it is possible to test how much material of the type to be spread by the machine (26) flows out per unit of time or in what length of time a given quantity of material flows from the reservoir (3) through the discharge outlet (5, 6), in order to determine on the basis of this measurement the size of passage of the discharge outlet (30, 31) of the machine (26), as is required to spread a predetermined quantity of material per unit of surface area during operation.

Fig. 1

# A MEASURING DEVICE FOR A MACHINE FOR SPREADING MATERIAL

The invention relates to a measuring device for a machine for spreading material, in particular for spreading granular and/or pulverulent material such as fertilizer, which machine comprises a hopper including a discharge section having at least one discharge outlet, through which discharge outlet, during operation of the machine, the said material can be fed to a spreader member in order to be spread over a surface area.

In prior art measuring devices of the above-defined type, the machine itself is employed as the measuring device. The manufacturer of the machine provides spreading tables, by means of which it is rendered possible for the user to adjust the doser member of the machine and/or to make trial runs to check the setting of its discharge outlet in order to obtain a spread of the material in a desired quantity per unit of surface area. Usually, these measuring systems are difficult to realize. To perform the measurement, the machine itself will have to be arranged in some sort of test position, which is not always possible in an advantageous manner. In addition, the material will have to be collected in order to establish e.g. the quantity thereof that flows from the discharge outlet per unit of time. To that end, for example, the spreader member is removed or the spreader blades are taken away therefrom so as to allow the material to be collected in a somewhat advantageous manner. In general, therefore, the machine is not quite suitable to be used as a measuring device.

It is an object of the invention to provide a measuring device, by means of which it is possible to effect to advantage a measurement for the determination of the size of passage of the discharge outlet of the machine, thereby obtaining a spread of a given quantity of material per unit of surface area. According to the invention, this can be achieved when the measuring device is one that can be used separately from the machine and comprises a reservoir including a discharge section having a discharge outlet, which discharge section and discharge outlet are at least substantially identical to those of the hopper, the arrangement being such that, independently of the machine, by means of the measuring device it is possible to test how much material of the type to be spread by the machine flows out per unit of time or in what length of time a given quantity of material of this type flows from the reservoir through the discharge outlet, in order to determine on the basis of this measurement the size of passage of the discharge outlet of the machine, as is required to spread a predetermined quantity of material per unit of surface area during operation. Prior to the spreading of material over a surface area to be spread by the machine, e.g. the spreading of fertilizer or seeds over agricultural fields, it is possible by means of the measuring device according to the invention to make a test, e.g. in a comparatively small working space, in order to determine with what size of passage the discharge outlet of the machine has to be set so as to be able to spread the desired quantity of material per unit of surface area of the surface to be spread.

An advantageous embodiment of the measuring device according to the invention is obtained when near the discharge outlet an adjustable control slide is arranged which corresponds to a doser slide arranged near the discharge outlet of the machine. Thus, it is possible to effect measurements for the various adjustable sizes of passage of the discharge outlet. In this manner a measurement can be performed in a simple and fast manner for any type of material to be spread over a surface area. Thus, the size of passage of the machine can always be tested easily on the basis of the type of material to be spread. For example, it is possible to perform a measuring test shortly before the material is spread over the surface area to be spread in dependence on, for example, the air humidity during spreading of the material. An advantageous embodiment according to the invention can be obtained when the measuring device is provided with an, e.g. electrically drivable, test spreader, the arrangement being such that the test spreader of the measuring device moves in the same way as the spreader member of the machine. In this way, the measuring device is adapted as much as possible to the operating conditions of the machine. The flow of the material from the discharge outlet then occurs in the same way as for the machine, wherein the material flowing through the discharge outlet is received by the spreader member.

For ease of operation of the measuring device, it will preferably be constructed, in accordance with the invention, of as light a weight as possible and as easy to handle as possible. Preferably, the measuring device is made of plastics to the greatest possible extent. Its production will be easy to accomplish, while the measuring device is affected to the least possible extent by the material to be spread, which is of particular importance when e.g. types of fertilizer are to be spread by the machine, which types of fertilizer must also be measured by the measuring device to obtain the desired measurement.

For a better understanding of the invention and to show how the same may be carried into effect, reference will now be made, by way of example, to the accompanying drawings of an advantageous embodiment of the measuring device of the invention, in which:

Figure 1 is a side view of a measuring device according to the invention, a portion thereof having been shown in cross-section;

Figure 2 is a plan view of a portion of the measuring device as shown in Figure 1, taken on the line II-II in Figure 1;

Figure 3 is a side view of a machine for spreading material, to which the measuring device belongs, and

Figure 4 is a plan view of a portion of the machine as shown in Figure 3.

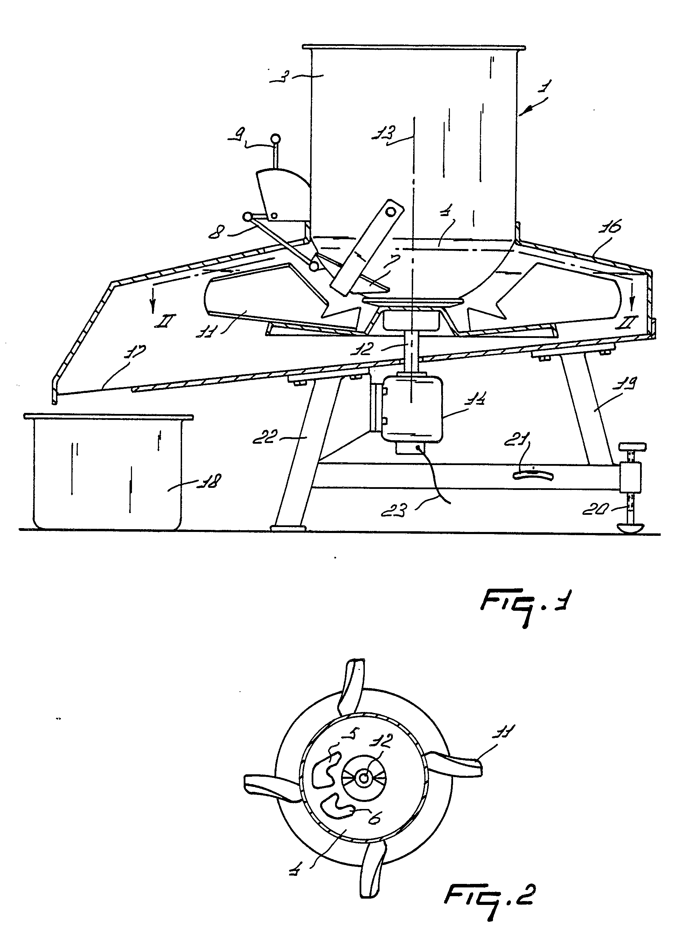

The measuring device 1 shown in Figures 1 and 2 includes a reservoir 3 having a discharge section 4. Two discharge outlets 5 and 6 are provided in the discharge section 4. A control slide 7 is arranged against the outer side of the discharge section 4. The control slide 7 extends over the two discharge outlets 5 and 6. The control slide 7 is coupled to an adjusting mechanism 8 which includes a control member 9.

A test spreader 11 is arranged under the reservoir 3. The test spreader 11 is connected to a carrier shaft 12 which is bearing-supported in a motor housing 14 and is pivotable about a rotary axis 13.

A receiving hood 16 provided with a discharge outlet 17 surrounds the test spreader 11. A receptacle 18 can be placed under the discharge outlet 17. The assembly of the reservoir 3, the test spreader 11 and the receiving hood 16 is fitted to a frame 19. Preferably, the frame 19 comprises two identical supporting feet 22 and a supporting foot 20 which is adjustable relative to the frame 19. The supporting foot 20 constitutes an adjusting device, by means of which the measuring device can be adjusted to a horizontal position, the arrangement being such that the rotary axis 13 extends at least substantially vertically. In this embodiment, the supporting feet 22 are formed by the lower ends of parts of the frame 19. Preferably, the frame is provided with a levelling device 21.

To use the measuring device, there is introduced in the reservoir 3 a quantity of material of the type to be spread by a spreader. To perform the measurement, the test spreader 11 is caused to rotate by means of the motor 14 about the rotary axis 13. For this purpose, the motor 14 is connected to an electric mains via a connecting cord 23 in a manner not shown in further detail. By means of the control member 9, the control slide 7 is set such that the discharge outlets 5 and 6 are opened fully or only partly. When performing the test using the measuring device 1, the material contained in the reservoir will be fed through the discharge outlets 5 and 6, which are open to a greater or lesser extent, to the test spreader 11 and be flung away thereby. The material flung away by the test spreader 11 is collected inside the receiving hood 16 and is discharged therefrom via the discharge outlet 17. The material thus discharged from the reservoir 3 via the receiving hood 16 is collected in a receptacle 18. For the purpose of this measurement, the measuring device can be installed in e.g. a work shop, it being possible for the measuring device to be placed by means of its supporting feet 20 and 22 on a supporting surface, e.g. on a work bench. Using the measuring device, a measurement can be performed such that, when the size of passage of the discharge outlets 5 and 6 has been set to a predetermined size, there can be established how much material flows from the reservoir through the discharge outlets 5 and 6 and is flung away inside for receiving hood via the test spreader 11, i.e. how much material flows from the reservoir via the adjusted size of passage of the discharge outlet per unit of time. To that end, the control slide 7 can be opened for a certain period of time, so that the quantity of material flowing from the reservoir and flung away via the test spreader 11 and collected in the receptacle 18 via the receiving hood 16 can be measured as regards its volume and/or weight. It is alternatively possible to feed a predetermined quantity of material into the reservoir 3, whereafter it can be established how much time is required to have this quantity of material flow from the reservoir at a given free size of passage of the discharge outlets set by the control slide 7. The value obtained by means of the measuring device 1 can be used to set the discharge outlet of a spreader.

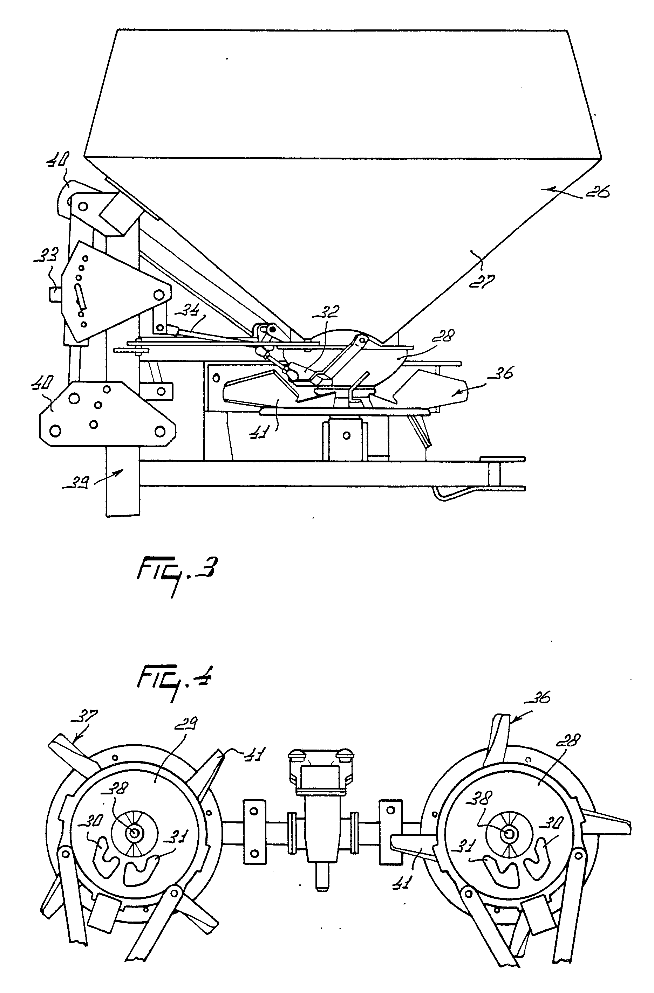

Figures 3 and 4 illustrate a machine 26 for spreading material over a surface area to be spread. The machine 26 includes a hopper 27 which is provided with two discharge nozzles (not shown in further detail). The lower ends of the discharge nozzles include respective discharge members 28 and 29 (Fig. 4). Each of the discharge members 28 and 29 has two discharge outlets 30 and 31, while against their outer sides there are provided doser slides 32, by means of which the said discharge outlets 30 and 31 optionally can be closed to a greater or lesser extent. For this purpose, the doser slide 32 is coupled to an adjusting device 34 which includes a control member 33.

Under each of the discharge members 28 and 29 there is provided a spreader member 36 and 37, respectively. The spreader members 36 and 37 are arranged about upwardly extending rotary shafts 38 in the machine. The hopper 27 and the spreader members 36 and 37 are supported by a frame 39 which may be provided with coupling members 40, by means of which the machine can be coupled to the lifting hitch of a tractor or a suchlike vehicle.

During operation, the machine as shown in Figures 3 and 4 is moved over the surface to be spread, during which travel the material is spread over a strip of a predetermined width. The machine is particularly suitable for spreading material over agricultural fields. Usually, the material to be spread, e.g. fertilizer, is to be spread over the intended surface in a given quantity per unit of surface area. To achieve this, in dependence on the spreading width and on the rate of travel of the machine, the material is fed from the hopper 27 via the discharge outlets 30 and 31 to the spreader members 36 and 37 in a predetermined quantity per unit of time. In order to be able to discharge, during operation, the material from the hopper via the discharge outlets 30 and 31 in the desired quantity per unit of time, it is possible to set the free size of passage of the said discharge outlets by means of the doser slide 32. The quantity of material to be spread per unit of surface may vary in dependence on the type of material to be spread or on other circumstances. In dependence on these conditions, including a varying air humidity which may influence the material to be spread, it should be established, at a given size of passage of the discharge outlets 30 and 31, how much material is actually discharged from the hopper and fed to the spreader members to be spread over the surface area to be spread. In order to achieve an appropriate setting of the doser slides 32 relative to the discharge outlets 30 and 31, it is possible to perform a measuring test by means of the measuring device 1 shown in Figures 1 and 2. In order to ensure an agreement between this measuring test and the actual practice as regards the machine 26, the measuring device is of such a construction that the discharge member 4 has a shape and dimension equal to those of the inter-identical discharge members 28 and 29. The discharge outlets 5 and 6 provided in the discharge member 4 have the same shape and dimension as the discharge outlets 30 and 31 and are also provided therein in the same manner as the discharge outlets 30 and 31 are provided in the relevant discharge members 28 and 29. The manner in which the discharge outlets 5 and 6 can be closed to a greater or lesser extent by the doser slide 7 is identical to that in which the size of passage of the discharge outlets 30 and 31 can be adjusted by the relevant doser slide 32.

The quantity of material flowing per unit of time through the present size of passage of the discharge outlets 30 and 31 can be influenced to a greater or lesser extent by the spreader members 36 and 37 located near the discharge sections. To that end, a test spreader 11 is arranged at the measuring device 1. Preferably at any rate, the test spreader 11 is identical to those portions of the spreader members 36 and 37 which are contiguous to the portions of the relevant discharge sections 28 and 29 that include the discharge outlets. Thus, it is achieved that the flow of material from the reservoir 3 through the discharge outlets 5 and 6 fully occurs in conformity with the actual practice of spreading of material by the machine 26. It is not necessary that the periphery of the test spreader 11 is equal in size to that of the spreader members 36 and 37. However, it is important for those portions of the test spreader 11 that are contiguous to the discharge section 4 to be identical to those portions of the spreader members 36 and 37 that are contiguous to the relevant discharge sections 28 and 29. When, for example, the spreader members 36 and 37 are provided with rather long spreader blades 41, the spreader blades of the test spreader 11 may be shorter, the arrangement being such that the spreader blades of the test spreader 11 are identical to those portions of the spreader blades 41 that are contiguous to the discharge members 28 and 29.

Prior to the spreading of the material by the machine 26, a test is made by means of the measuring device 1 in order to determine how the doser slides 32 have to be set relative to the discharge outlets 30 and 31 so as to achieve that the desired quantity of material is fed to the spreader members 36 and 37 per unit of time, thereby attaining that the desired quantity is spread per unit of surface area. Using the measuring device 1, the value is determined as to to what size of passage the discharge outlets 5 and 6 have to be set by means of the doser slide 7 so as to achieve that the desired quantity of material flows from the reservoir 3 through the discharge outlets 5 and 6 per unit of time.

During this measurement, the test spreader 11 is caused to rotate about the rotary axis 13 at a number of revolutions equal to that of the spreader members 36 and 37 during operation of the machine 26.

It will be obvious that thus by means of the measuring device 1 there can be made a test which is in agreement with the actual practice. This measuring test can be performed in a simple manner by means of the measuring device 1, e.g. on the work bench in a work shop. When the measuring device 1 is used, it is not necessary to perform a trial run with the actual machine 26. Such a trial run with the machine would require a lot of time and is not to be effected easily, as in particular care should be taken of collecting the material spread so as to be able to measure same. Using the measuring device 1, it is possible to look in a simple manner for the optimum setting of the control slide 7 so as to allow the measurement of the flow of a certain quantity of material from the reservoir 3 per unit of time.

When by means of the measuring device 1 the proper setting of the control slide 7 has been determined for the discharge of a predetermined quantity of material per unit of time from the reservoir 3 via the discharge outlets 5 and 6, this detected value for the control slide 7 can be used as an indication for the setting of doser slides 32 relative to the discharge members 28 and 29. The machine 26 has two discharge members 28 and 29, whilst the measuring device 1 has only one discharge member 4. In this connection, it will be obvious that in the measuring device 1 there has been looked for a position of the control slide 7, in which position the quantity flowing from the reservoir 3 is equal to that flowing through each of the discharge members 28 and 29. The measuring device 1 provides a reliable setting of the doser slides 32, which setting can be achieved advantageously in an appropriate manner. Consequently, by means of the measuring device of the invention it is possible to obtain in a simple manner the setting of the machine 26 without the necessity of adjustment and re-adjustment thereof, or of any other difficult measure to be taken in order to achieve a proper setting of the doser slides 32.

It will be obvious that, in order to obtain the desired measurement, the measuring device 1 must preferably be as much as possible in agreement with the machine 26 as regards the design of the discharge section 4 cum discharge outlets 5 and 6 and also as regards the doser slide 7 and the test spreader 11. However, it is alternatively possible to obtain already a proper indication as to the setting of the doser slides 32 when the measuring device 1 is designed without a test spreader, the arrangement begin such that the material flowing from the discharge outlets 5 and 6 can be collected directly by a receptacle 18. Then, the measuring device 1 may be of a simpler and cheaper design.

The invention is not limited to the features described in the foregoing but also relates to all the details shown in the accompanying drawings, whether they have been described or not.

## Claims

1. A measuring device (1) for a machine for spreading material, in particular for spreading granular and/or pulverulent material such as fertilizer, which machine (26) comprises a hopper (27) including a discharge section (28) having at least one discharge outlet (30, 31), through which discharge outlet, during operation of the machine, the said material can be fed from the hopper to a spreader member (36) in order to be spread over a surface area, characterized in that the measuring device (1) is one that can be used separately from the machine (26) and comprises a reservoir (3) including a discharge section (4) having a discharge outlet (5, 6), which discharge section (4) and discharge outlet (5, 6) are at least substantially identical to those of the hopper (27), the arrangement being such that, independently of the machine (26), by means of the measuring device (1) it is possible to test how much material of the type to be spread by the machine (26) flows out per unit of time or in what length of time a given quantity of material flows from the reservoir (3) through the discharge outlet (5, 6), in order to determine on the basis of this measurement the size of passage of the discharge outlet (30, 31) of the machine (26), as is required to spread a predetermined quantity of material per unit of surface area during operation.

2. A measuring device (1) for measuring a quantity of material, such as fertilizer, seeds or suchlike material, flowing through a discharge outlet (5, 6), so as to determine with what size of passage a discharge outlet (30, 31) of a machine (26) has to be set for the spread of material, during operation, over a surface to be spread with a desired quantity per unit of surface area, characterized in that the measuring device (1) is designed as an autonomous device which can be used separately from the machine (26) by means of which the material is spread over a surface area to be spread during operation.

3. A measuring device as claimed in claim 1 or 2, characterized in that near the discharge outlet (5, 6) a control slide (7) is provided, by means of which the size of passage of the discharge outlet (5, 6) can optionally be set to one of at least two values.

4. A measuring device as claimed in any one of the preceding claims, characterized in that the measuring device (1) includes a test spreader (11) which in at least substantially the same manner connects up with the reservoir discharge section (4) comprising the discharge outlet (5, 6) as the spreader member (36) of the machine (26) connects up with the hopper discharge section (28) comprising the discharge outlets (30, 31).

5. A measuring device as claimed in any one of the preceding claims, characterized in that the test spreader (11) of the measuring device (1) can be caused to rotate, e.g. by means of an electric motor, during the flow of the material through the discharge outlet (5, 6) in the same manner as the spreader member (36) during operation of the machine (26).

6. A measuring device as claimed in any one of the preceding claims, characterized in that the measuring device (1) includes a frame (19), by means of which it can be positioned on a supporting plane as an autonomous device.

7. A measuring device as claimed in any one of claims 4 to 6, characterized in that a receiving hood (16) is provided around the test spreader (11), by means of which hood (16) the material flung away by the test spreader (11) can be caught so as to be able to collect same in a receptacle.

8. A measuring device as claimed in claim 7, characterized in that the receiving hood (16) is provided with some clearance around the test spreader periphery so as not to influence the throw of the material by the test spreader (11).

9. A measuring device as claimed in any one of the preceding claims, characterized in that the device is produced from light-weight material.

10. A spreader system for spreading material, such as fertilizer, seeds or a suchlike material, characterized in that the spreader system comprises a spreader machine (26) and, designed separately therefrom, a measuring device (1) for determining to what size of passage the discharge outlet (30, 31) of the spreader machine (26) has to be set so as to enable the machine to spread a desired quantity of material per unit of surface area during operation.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A-2064374 (MCINTYRE)<br>* page 2; figures 1, 2 *<br>--- | 1, 5, 6, 9 | A01C17/00 |
| A,P | EP-A-241982 (VAN DER LELY)<br>* column 3, line 31 - column 7, line 12; figures 1-5 *<br>----- | 1, 7, 8 | |
| | | | **TECHNICAL FIELDS SEARCHED (Int. Cl.4)**<br><br>A01C |

The present search report has been drawn up for all claims

| Place of search | Date of completion of the search | Examiner |
|---|---|---|
| THE HAGUE | 28 DECEMBER 1988 | VERMANDER R.H. |